# DEMANDE DE BREVET EUROPEEN

(11) **EP 3 789 803 A1**
(43) Date de publication de la demande: **10.03.2021**
(21) Numéro de dépôt: 20194243.0
(22) Date de dépôt: 03.09.2020
(51) Int. Cl.: G02B 6/38, G02B 6/40

(54) **ENSEMBLE POUR L'ASSEMBLAGE DE FIBRE OPTIQUE AVEC AU MOINS DEUX COUPLES DE CONTACTS MPO**

(30) Priorité: 05.09.2019 FR 1909798
(71) Demandeur: SOURIAU, 78000 Versailles (FR)
(72) Inventeur: PHILIPPE, Alain, 72560 CHANGÉ (FR); LEROYER, Serge, 72000 LE MANS (FR); CLAUDOT, Sébastien, 72160 Thorigné-Sur-Dué (FR)
(74) Mandataire: Ipside

(57) **Abrégé**

L'invention concerne un ensemble pour l'assemblage de fibre optique avec au moins deux couples de contacts MPO (22a, 22b), pour contacts optiques du type Multifibre Push-On (acronyme pour multifibre pousser sur), l'ensemble comporte une embase (20) comportant des contacts MPO (22a) coopérant avec une fiche (21). La fiche (21) comporte : des ouvertures axiales traversantes destinées à recevoir les contacts MPO (22b) ; un premier élément de détrompage positionné dans chaque ouverture axiale de la fiche (21) et un deuxième élément de détrompage positionné sur chaque contact MPO (22b) correspondant ; un élément de maintien des contacts MPO (22b) adapté à maintenir les contacts MPO (22b) dans la fiche (21) ; la forme fiche (21) coopère avec la forme de l'embase (20) pour assurer son accouplement, l'embase (20) comporte des éléments de verrouillage de contacts MPO (22a et 22b), chaque contact MPO (22b) de la fiche (21) est verrouillé avec le contact MPO (22a) correspondant dans l'embase (20).

## Description

### Domaine technique de l'invention

La présente invention concerne un ensemble pour l'assemblage de fibre optique permettant de connecter simultanément au moins deux couples de contacts MPO. On entend par un couple de contacts MPO, le fait qu'un contact MPO se trouve dans une embase et qu'un autre contact MPO se trouve dans une fiche.

La présente invention s'applique, en particulier, aux applications de transmission de données en aéronautique.

Le besoin consiste à simplifier et sécuriser la mise en connexion simultanée de plusieurs contacts multivoies optiques à verrouillage rapide de type MPO (acronyme de Multifiber Push-On) tout en conservant les éléments de verrouillage et de guidage (adaptateur et contacts MPO) conformes à la norme citée ci-après et permettant aussi de réutiliser des produits standard MPO.

### Technique antérieure

Le contact MPO permet de connecter de 8 à 48 fibres optiques simultanément grâce à un système de verrouillage rapide type « push pull » réalisé grâce à des clips situés dans l'adaptateur MPO et la forme complémentaire situé dans le contact MPO. Le déverrouillage du contact MPO est réalisé par une traction manuelle sur la bague de verrouillage du contact MPO. Le contact et son adaptateur MPO sont définis dans les normes IEC61754-7 ou EIA/TIA 604-5 (FOCIS 5) et ont été initialement développé pour les marchés des datacenters. Il est aujourd'hui largement répandu dans différents marchés et disponible chez plusieurs fabricants tels SENKO (marque déposée) ou US CONNEC (marque déposée). La norme et les essais croisés entre fabricants ont permis de fiabiliser les performances de la connexion optique et de développer une offre de composants complémentaires riche : moyens de contrôle, de câblage, de nettoyage.

Pour son intégration dans un avion, l'embase optique doit proposer un design proche d'un connecteur standard type EN4165 ou ARINC836. Le brevet US10234635 décrit un connecteur EN4165 comportant deux sous-ensembles utilisant des contacts spécifiques optiques.

L'état de l'art montre un grand nombre de connecteurs non prévus initialement pour l'optique ce qui a pour inconvénient majeur de ne pas réutiliser le principe de guidage et de verrouillage des contacts MPO.

Le système d'alignement des deux parties du connecteur fait intervenir plusieurs pièces ce qui entraine un risque pour la qualité de l'alignement des férules MT. La qualification de fabricants dont les connecteurs doivent être inters mariables est compliquée du fait de la difficulté de traduire dans les normes l'exigence de guidage nécessaire à la performance optique. Seuls des essais croisés sur une période suffisamment longue pour prendre en compte les aléas de fabrication permettraient de garantir cette performance, ce qui est trop coûteux et long. L'obligation d'utiliser des outillages optiques spécifiques oblige également l'avionneur à investir massivement pour équiper tous ces centres de montage ou de maintenance avion.

Le document WO2016007491 fig.8, fig.9 et fig.10 décrit dans l'ordre : un ensemble fiche comprenant deux sous-ensembles de contact MPO intégrant chacune une férule MT ; une architecture d'ensemble fiche de volume cylindrique ; un assemblage des deux sous-ensemble contact par emboitement.

Cet ensemble fiche présente, a minima, les inconvénients ; de devoir déboiter l'assemblage afin de sortir, au moins un, sous-ensemble de contact MPO ; d'un ensemble fiche de forme circulaire, nécessaire à l'accouplement par liaison vissée à une embase, recevant des sous-ensembles contact de forme rectangulaire. Cette opération est donc complexe. Le nombre de pièces de l'ensemble fiche et embase est important avec 13 pièces utilisées en supplément des contacts MPO.

Le document US2012/0039569 décrit un connecteur permettant de maintenir les contacts MPO dans l'embase et dans la fiche grâce à leur système de rétention et de les accoupler grâce à une interface spécifique.

L'inconvénient de cette solution est que le verrouillage est assuré par un clipsage spécifique. D'autre part, le développement et la qualification d'une solution spécifique de verrouillage entraîne des coûts importants pour garantir à 100% l'intermariabilité et interchangeabilité entre les fabricants.

Un des buts de l'invention est d'utiliser les éléments de verrouillage présents sur les contacts et adaptateurs MPO ce qui permet de réutiliser les accessoires développés pour les contacts MPO (contrôle, ...).

### Présentation de l'invention

La présente invention vise à remédier à ces inconvénients avec une approche novatrice consistant à réutiliser le contact MPO et le dimensionnel de l'adaptateur MPO définis à la norme pour garantir au client aéronautique un verrouillage éprouvé et plusieurs sources d'approvisionnement, en ajoutant une pièce simple et peu coûteuse permettant à plusieurs contacts MPO de se verrouiller et se déverrouiller simultanément en un seul mouvement de la fiche et apporter des fonctions additionnelles non présentes dans les contacts MPO normalisés.

A cet effet, la présente invention vise un ensemble pour l'assemblage de fibre optique avec au moins deux couples de contacts MPO, pour contacts optiques du type Multifibre Push-On, définit selon la norme IEC61754-7, l'ensemble comporte une embase comportant des contacts MPO et des adaptateurs MPO coopérant avec une fiche, remarquable en ce que :
- la fiche comporte :
   - des ouvertures axiales traversantes destinées à recevoir les contacts MPO ;
   - un premier élément de détrompage positionné dans chaque ouverture axiale de la fiche et un deuxième élément de détrompage positionné sur chaque contact MPO correspondant ;
   - un élément de maintien des contacts MPO adapté à maintenir les contacts MPO dans la fiche ;
- un épaulement adapté pour libérer simultanément le mécanisme de déverrouillage des contacts MPO lors d'une traction opérée sur la fiche, la forme de l'épaulement coopère avec un épaulement de la bague de verrouillage du contact MPO ;
   - la forme fiche coopère avec la forme de l'embase pour assurer son accouplement et guider les contacts MPO lors de l'accouplement ;
- l'embase comporte des adaptateurs MPO dans lesquels chaque contact MPO de la fiche est verrouillé avec le contact MPO correspondant dans l'embase.

Les dimensions des adaptateurs MPO et des contacts MPO étant conformes à la norme, ainsi, on assure le bon alignement des contacts MPO contenu dans l'embase avec les contacts MPO de la fiche. Les contacts MPO de la fiche sont verrouillés par l'élément de verrouillage des adaptateurs MPO de l'embase.

Ladite embase a des ouvertures axiales respectant la norme des adaptateurs MPO et réalisant les fonctions de guidage et de rétention des contacts MPO, et une forme extérieure complémentaire à celle de la fiche pour permettre le guidage de la fiche.

Grâce à ces dispositions, une fiche monobloc permet à un opérateur de connecter plusieurs contacts MPO en un seul mouvement de la fiche. Ainsi on assure que tous les contacts MPO sont bien maintenus.

L'ouverture axiale comporte un épaulement associé à un élément de maintien, coopérant avec un épaulement de la bague de verrouillage de chaque contact MPO permettant de retenir le contact MPO dans l'ouverture axiale de la fiche

Lors d'une traction sur la fiche, l'épaulement transfère la traction simultanément sur la bague de verrouillage des contacts MPO ce qui permet de libérer en un seul mouvement le mécanisme de déverrouillage de tous les contacts MPO avec les adaptateurs MPO associés.

L'invention est avantageusement mise en œuvre selon les modes de réalisation et les variantes exposées ci-après, lesquelles sont à considérer individuellement ou selon toute combinaison techniquement opérante.

Dans un mode de réalisation, l'élément de maintien est un clip de rétention moulé avec la fiche et positionné au niveau de chaque ouverture axiale. Ce clip peut appuyer sur une entretoise à l'arrière du contact MPO ou un manchon arrière de contact MPO adapté à cet effet. La matière de la fiche est habituellement un thermoplastique dur.

Dans un mode de réalisation, chaque contact MPO de la fiche comporte une entretoise, le premier élément de détrompage est positionné sur ladite entretoise.

Dans une autre variante d'un mode de réalisation, l'entretoise est intégrée au corps principal du contact MPO ou sur le manchon. Dans ce cas, l'élément de détrompage est aussi positionné sur le corps du contact MPO, le manchon ou sur la bague de verrouillage.

Dans un mode de réalisation et notamment lorsque le nombre de contacts MPO à verrouiller est important, l'entretoise est souple pour permettre le rattrapage des jeux longitudinaux entre tous les contacts MPO et assurer qu'à la fin du mouvement de la fiche l'ensemble des contacts MPO sont verrouillés.

Dans un mode de réalisation, les ouvertures axiales dans la fiche sont légèrement décalées pour avoir un verrouillage et un déverrouillage successifs des contacts MPO. Cette disposition permet de limiter l'effort de verrouillage et de déverrouillage mais impose d'épaissir la pièce adaptatrice ou d'augmenter sa souplesse.

Dans un mode de réalisation, la fiche est réalisée dans une matière souple type élastomère, ce qui permet de réaliser le maintien des contacts MPO par déformation radiale de l'ouverture axiale.

Dans un mode de réalisation, l'ouverture axiale comporte un épaulement coopérant avec une partie de chaque contact MPO pour bloquer l'extrémité du contact MPO dans l'ouverture axiale de la fiche, ledit contact MPO comporte une bague de verrouillage positionnée dans l'ouverture axiale et insérée de l'autre côté de l'insertion du chaque contact MPO pour maintenir les contacts MPO.

Dans un mode de réalisation, le premier détrompage est une rainure et le deuxième détrompage est un évidement de forme complémentaire à celle de la rainure.

Dans un mode de réalisation, la fiche comporte un film de protection des contacts MPO. Ainsi, le film de protection est à usage unique et garantit la propreté du contact.

Dans un mode de réalisation, la fiche comporte une partie rainurée facilitant la préhension.

Dans un mode de réalisation, la fiche comporte un joint d'étanchéité positionné autour des contacts MPO et réalise l'étanchéité lors de l'accouplement de la fiche et l'embase. Le joint d'étanchéité peut être complété par une membrane de type soufflet intervenant entre les câbles des contacts et la fiche ou par une adaptation du contact MPO permettant de réaliser une étanchéité radiale entre l'arrière du contact MPO et la partie arrière de l'ouverture radiale de la fiche. Lorsque la fiche est réalisée en matière souple, la souplesse de la fiche peut permettre de réaliser la fonction étanchéité avec l'embase et avec l'arrière du contact MPO sans ajout de pièce supplémentaire.

Grâce à ces dispositions, la solution est rendue étanche, avec une protection permettant de protéger les contacts de type MPO et leur face avant comprenant les terminaisons des fibres optiques.

Dans un mode de réalisation, la fiche comporte un troisième élément de détrompage positionné sur la surface extérieure coopérant avec un quatrième élément de détrompage positionné sur l'embase.

La fiche et de l'embase incluent des évidements et rainures de forme complémentaire permettant de réaliser un détrompage supplémentaire à celui des contacts, de design sensiblement proche du standard type EN4165 ou ARINC836, pour assurer le juste appairage des multiples connecteurs prévus dans l'architecture réseau.

Dans un mode de réalisation, l'embase comporte une plaque séparatrice dont chaque côté comporte au moins deux ouvertures adaptées à recevoir une partie de contact MPO d'une fiche. Ainsi, il est nécessaire d'avoir une fiche de chaque côté pour réaliser l'assemblage de contacts MPO.

La fiche comporte un guide coulissant permettant d'accoupler facilement ensemble deux fiches identiques grâce à une embase comportant une plaque séparatrice appelée pour la suite embase prolongateur.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente une vue perspective d'une fiche selon un premier mode de réalisation et d'une embase objet de la présente invention ;
[Fig. 2] la figure 2 représente une vue perspective d'une fiche selon un premier mode de réalisation objet de la présente invention ;
[Fig. 3] la figure 3 représente une vue perspective d'une fiche selon un deuxième mode de réalisation et d'une embase objet de la présente invention ;
[Fig. 4] la figure 4 représente une autre vue perspective d'une fiche selon un deuxième mode de réalisation objet de la présente invention ;
[Fig. 5] la figure 5 représente une vue en coupe de profil d'une fiche selon un deuxième mode de réalisation ;
[Fig. 6] la figure 6 représente une vue en coupe de dessous selon un plan médian d'une fiche selon un deuxième mode de réalisation ;
[Fig. 7] la figure 7 représente une vue avant éclatée d'une fiche selon le premier mode de réalisation ;
[Fig. 8] la figure 8 représente une vue arrière éclatée d'une fiche selon le premier mode de réalisation ;
[Fig. 9] la figure 9 représente un troisième mode de réalisation avec une fiche comportant dix contacts MPO ;
[Fig. 10] la figure 10 représente une vue en coupe d'une fiche selon un troisième mode de réalisation ;
[Fig. 11] la figure 11 représente une vue en perspective d'un quatrième mode de réalisation ;
[Fig. 12] la figure 12 représente une vue en perspective du quatrième mode de réalisation lorsque les contacts MPO sont verrouillées sur une embase prolongateur.

### Description des modes de réalisation

L'explication suivante concerne certaines références liées aux figures détaillées ci-dessous. Cette explication a pour but de donner le principe de l'invention.

Selon un premier mode de réalisation, la fiche 21 est moulée dans une matière thermoplastique rigide et contient deux contacts MPO 22b, munis chacun d'une entretoise 26 pour l'appui des clips 25 de rétention à l'arrière de la fiche 21.

Selon un deuxième mode de réalisation, la fiche 21 est souple et comporte des formes en relief inscrites dans le matériau souple permettant de créer un clip de rétention.

La butée arrière des contacts MPO étant assuré par les clips de rétention, la butée avant des contacts MPO est réalisée par l'épaulement 28 de la fiche qui empêche la translation vers l'avant de la bague de verrouillage 27 du contact MPO.

Les férules MT appartenant aux contacts 22 MPO sont "mécaniquement" protégées par le gabarit de la fiche 21 selon le premier mode de réalisation ou le deuxième mode de réalisation.

Les férules MT (acronyme de « Mechanical Transfer » ou transfert mécanique en français) sont un assemblage mécanique à ressort léger et à profil bas qui offre une connexion optique robuste résistante aux chocs et aux vibrations pour les applications dans un environnement rigoureux.

La connexion de la fiche 21, selon le premier mode de réalisation ou le deuxième mode de réalisation, à une embase optique, se fait de manière aisée en poussant simplement et manuellement sur la fiche. Le maintien de la connexion est obtenu par l'intermédiaire des contacts 22 MPO. La fiche 21 entre avantageusement dans le gabarit d'une embase du standard EN4165 largement utilisée dans le domaine aérospatial.

L'étanchéité à l'arrière des fiches 21, selon le premier mode de réalisation ou le deuxième mode de réalisation, peut être réalisée par une membrane reliant le corps de fiche et les câbles gainés en sortie des contacts MPO. La souplesse de la fiche 21 dans le deuxième mode de réalisation peut permettre de réaliser une étanchéité avec l'embase et avec l'arrière du contact MPO sans avoir à ajouter des joints supplémentaires.

La déconnexion se fait en tirant simplement et manuellement sur la fiche 21, selon le premier mode de réalisation ou le deuxième mode de réalisation. Les contacts 22 MPO restent solidaires de la fiche 21 après déconnexion. La fiche 21 est prête pour une nouvelle connexion si nécessaire. Ce principe, adapté à une fiche de deux contacts, est étendu à des fiches ayant plus d'une paire de contacts comme par exemple la fiche 210 selon un troisième mode de réalisation avec dix contacts 22 MPO.

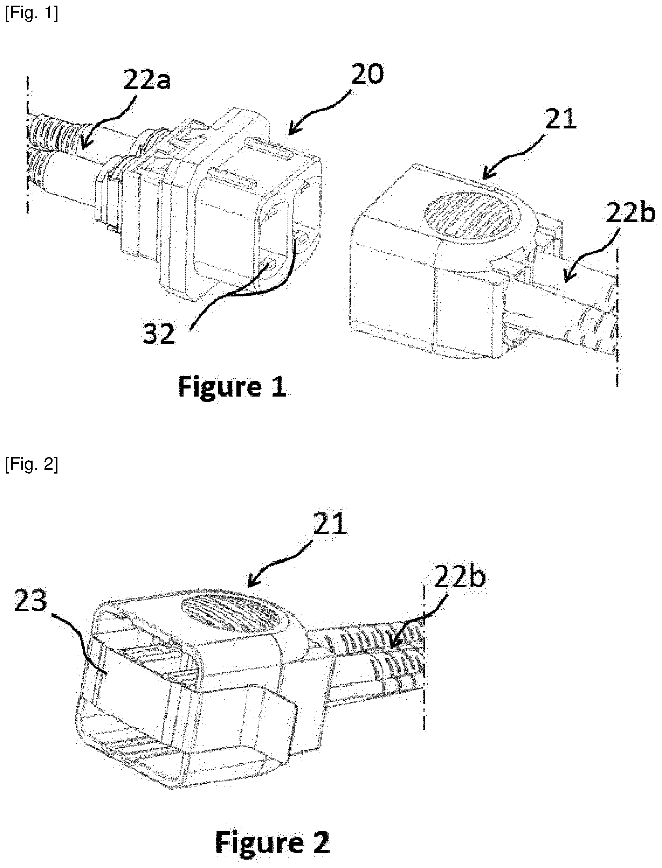

La figure 1 montre une vue perspective d'une fiche selon le premier mode de réalisation et d'une embase.

L'embase 20 comporte deux contacts MPO 22a et comporte des adaptateurs MPO 32 qui s'accouplent avec deux contacts MPO 22b montés dans la fiche 21.

Chaque adaptateur MPO 32 est composé de deux clips.

La figure 2 montre une vue perspective d'une fiche selon le premier mode de réalisation équipée d'un obturateur optionnel.

La face avant optique des férules MT est protégée grâce à un film de protection 23 collant "obturateur ". Ce film est enlevé "au dernier moment", avant la connexion, par l'opérateur final.

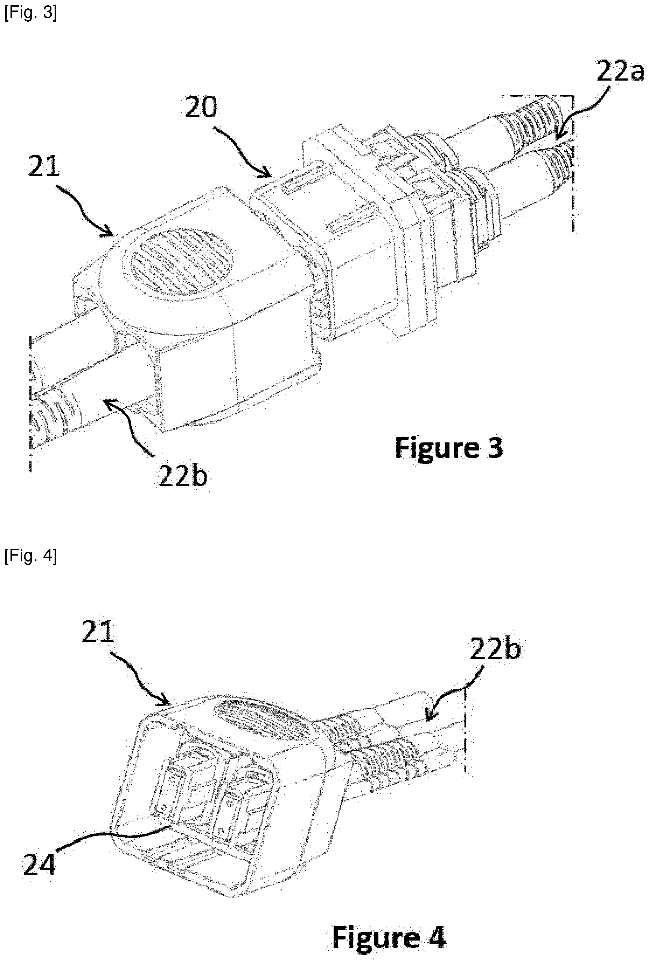

La figure 3 montre une vue perspective d'une fiche selon un deuxième mode de réalisation et d'une embase 20. L'embase 20 comporte deux contacts MPO 22b et la fiche 21 deux contacts MPO 22b

La figure 4 montre une autre vue perspective d'une fiche selon le premier mode de réalisation.

Entre la fiche 21 et l'embase 20 se trouve un joint d'étanchéité 24 qui peut être avantageusement moulé dans la fiche 21 ou être une pièce supplémentaire insérée de l'autre côté de l'insertion des contacts MPO 22.

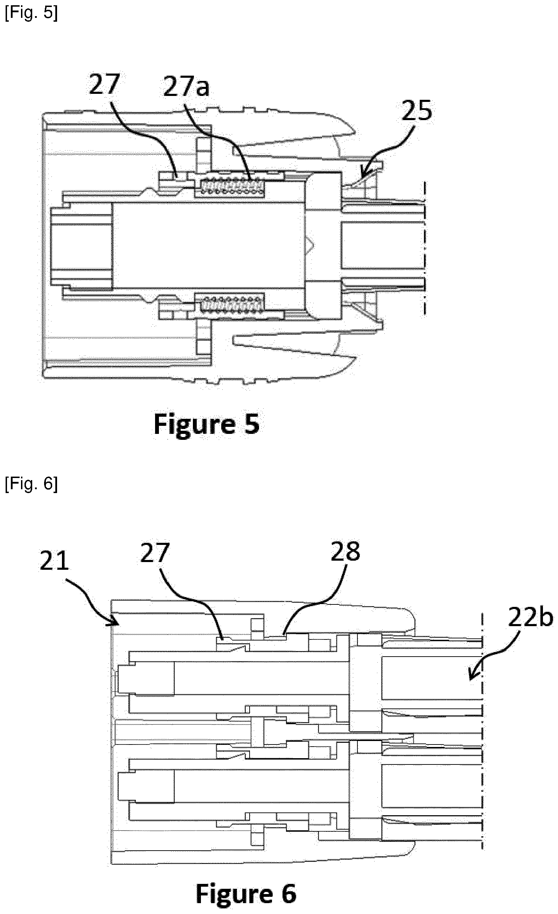

La figure 5 montre une vue en coupe d'une fiche selon le premier mode de réalisation. L'élément de maintien est un clip de rétention 25 positionné au niveau de chaque ouverture axiale.

L'ouverture axiale est adaptée pour permettre la translation sans frottement vers l'arrière de la bague de verrouillage 27 du contact MPO 22b lors du verrouillage sur l'embase. Le ressort 27a rappelant vers l'avant la bague de verrouillage lorsque le verrouillage est terminé.

La figure 6 montre une vue en coupe d'une fiche selon le premier mode de réalisation.

Sur cette figure, il est montré le dispositif permettant de réaliser la butée avant du contact MPO. L'ouverture axiale de la fiche 21 comporte un épaulement 28.

L'épaulement 28 sert comme butée et coopère avec une partie de la bague de verrouillage 27 du contact MPO 22b pour empêcher la translation vers l'avant l'extrémité du contact MPO 22b dans l'ouverture axiale de la fiche 21. Une traction appliquée sur la fiche entraîne grâce à cet épaulement le recul des bagues de verrouillage 27 des contacts MPO permettant de libérer les clips de rétention situés dans l'embase et permettre le déverrouillage des contacts MPO 22b. Ce mécanisme est précisé dans la norme IEC61754-7.

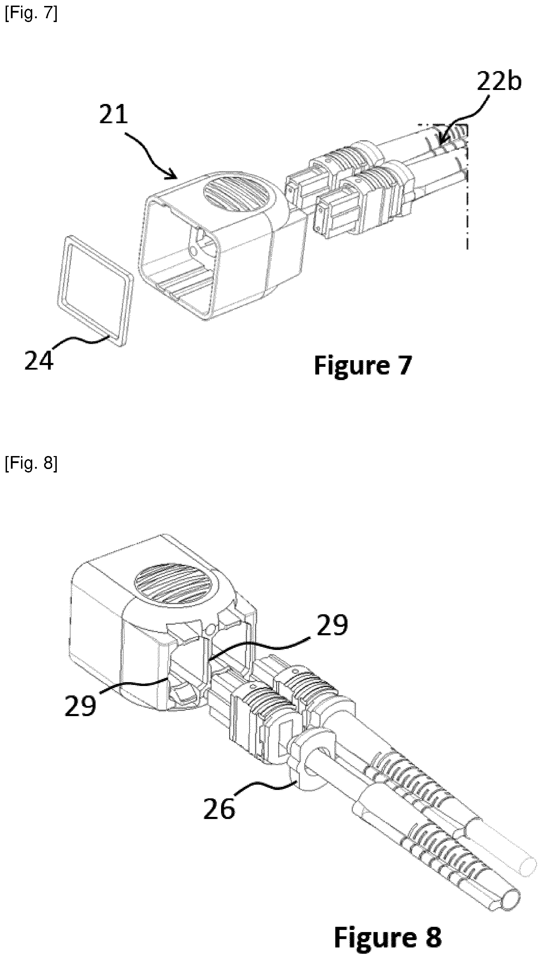

La figure 7 montre une vue éclatée d'une fiche selon le premier mode de réalisation.

La fiche 21 comporte :
- des ouvertures axiales traversantes destinées à recevoir les contacts MPO 22b ;
- un premier élément de détrompage positionné dans chaque ouverture axiale de la fiche 21 et un deuxième élément de détrompage positionné sur chaque contact MPO 22b correspondant ;
- un élément de maintien des contacts MPO 22b adapté à maintenir les contacts MPO 22b dans la fiche 21 ;
- la forme fiche 21 coopère avec la forme de l'embase 20 pour assurer son accouplement.

L'embase 20 comporte des éléments de verrouillage de contacts MPO 22a et 22b, chaque contact MPO 22b de la fiche 21 est verrouillé avec le contact MPO 22a correspondant dans l'embase 20.

Un joint 24 permet de garantir l'étanchéité de la connexion. Le joint d'étanchéité 24 est positionné autour des contacts MPO 22b de la fiche et réalise l'étanchéité lors de l'accouplement de la fiche 21 et l'embase 20.

La figure 8 montre une vue éclatée d'une fiche selon le premier mode de réalisation.

Sur l'entretoise 26 se trouve un premier élément de détrompage. Le deuxième élément de détrompage 29 sur la chaque ouverture axiale correspondante de la fiche.

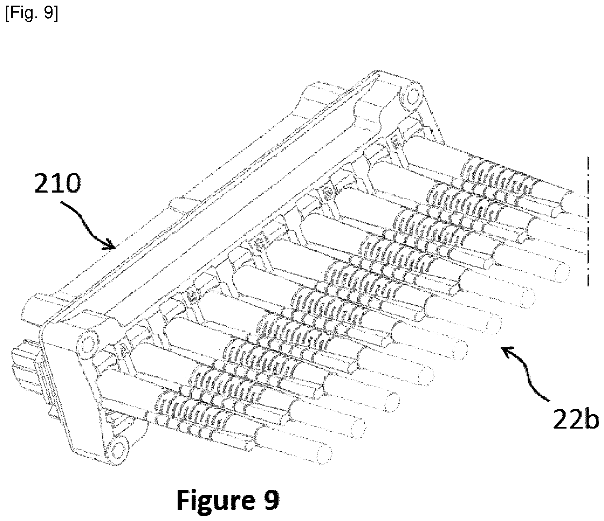

La figure 9 montre un troisième mode de réalisation avec une fiche comportant dix contacts MPO.

Dans ce cas précis, le rattrapage des jeux dans l'axe du mouvement lors de la connexion est réalisé par une entretoise plus épaisse, mais souple avec effet ressort permettant également d'assurer la force suffisante pour que le contact MPO se verrouille sur l'embase.

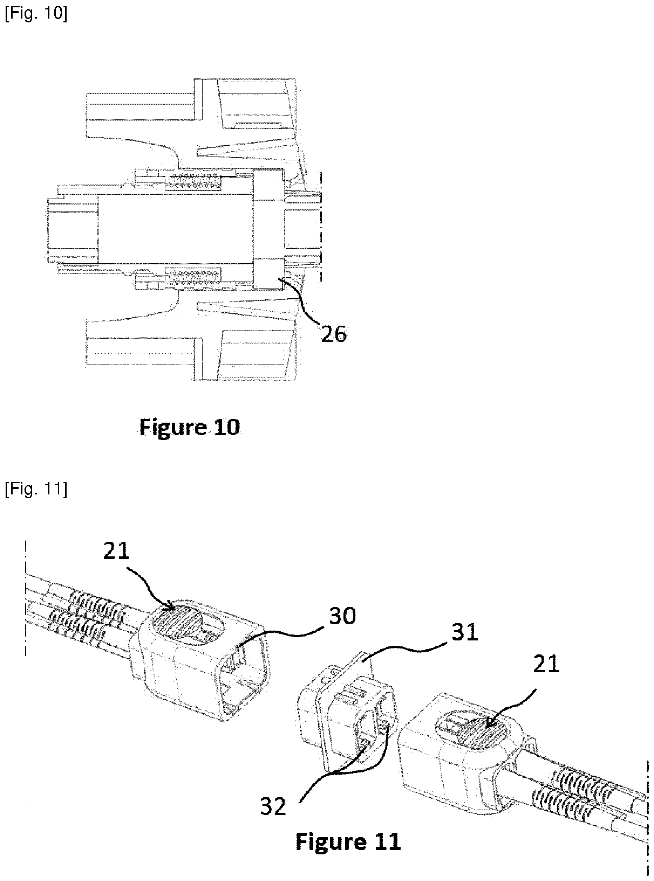

La figure 10 montre une vue en coupe d'une fiche selon un troisième mode de réalisation sur lequel est montré l'entretoise 26.

La figure 11 montre un quatrième mode de réalisation avec une fiche qui comporte un guide coulissant.

Dans ce cas précis, le guide coulissant 30 permet de réaliser le guidage de la fiche 21 dans l'embase prolongateur 31 et protéger mécaniquement les contacts MPO lorsque la fiche est désaccouplée. Le guide coulissant se recule lors de l'opération de verrouillage des contacts MPO. Un système de rappel permet de le ramener à sa position initiale lors du déverrouillage des contacts MPO.

Dans ce mode de réalisation l'embase prolongateur 31 permet de connecter directement deux fiches 21. L'embase prolongateur 31 comporte des adaptateurs MPO 32.

Dans cette version, l'embase prolongateur 31 comporte quatre ouvertures pour recevoir une partie de chaque contact MPO. Chaque contact MPO s'assemble avec l'adaptateur MPO se faisant face. L'embase prolongateur 31 comporte une plaque séparatrice dont chaque côté comporte deux ouvertures pour recevoir une partie de chaque contact MPO. La plaque séparatrice comporte des trous traversants pour laisser passer la connexion des fibres optiques et réaliser la liaison.

Chaque fiche 21 comporte deux contacts MPO et l'embase permet de relier chaque contact MPO ensemble pour former dans cette configuration deux couples de contact MPO.

Dans une variante, non représentée, l'embase prolongateur comporte une pluralité d'ouverture pour associer la pluralité de contacts MPO contenu dans chaque fiche.

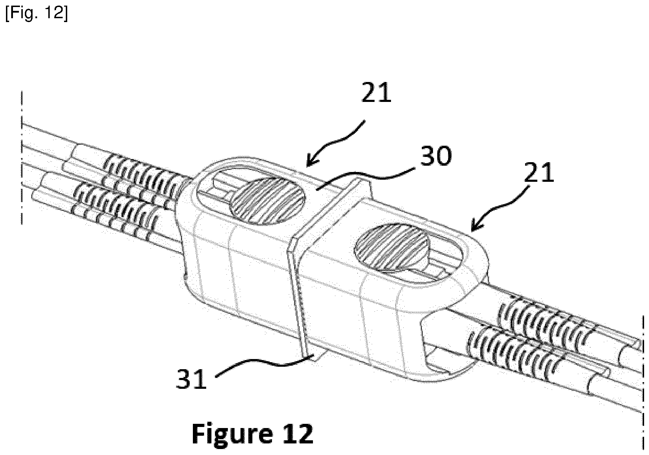

La figure 12 montre deux fiches en position verrouillée suivant le quatrième mode de réalisation.

### LISTE DES SIGNES DE RÉFÉRENCE

**[Tableau 1]**

| Références | Désignations |
|---|---|
| 20 | embase |
| 21 | fiche pour deux contacts |
| 210 | fiche pour dix contacts |
| 22 | contacts MPO |
| 23 | film de protection |
| 24 | joint d'accouplement |
| 25 | clip de rétention |
| 26 | entretoise |
| 27 | bague de verrouillage |
| 27a | ressort |
| 28 | épaulement |
| 29 | deuxième élément de détrompage |
| 30 | guide coulissant |
| 31 | embase prolongateur |
| 32 | adaptateur MPO |

## Revendications

1. Ensemble pour l'assemblage de fibre optique avec au moins deux couples de contacts MPO (22a, 22b), pour contacts optiques du type Multifibre Push-On (acronyme pour multifibre pousser sur), définit selon la norme IEC61754-7, l'ensemble comporte une embase (20) comportant des contacts MPO (22a) et des adaptateurs MPO (32) coopérant avec une fiche (21), **caractérisé en ce que** :
- la fiche (21) comporte :
- des ouvertures axiales traversantes destinées à recevoir les contacts MPO (22b) ;
- un premier élément de détrompage positionné dans chaque ouverture axiale de la fiche (21) et un deuxième élément de détrompage positionné sur chaque contact MPO (22b) correspondant ;
- un élément de maintien des contacts MPO (22b) adapté à maintenir les contacts MPO (22b) dans la fiche (21) ;
- un épaulement (28) adapté pour libérer simultanément le mécanisme de déverrouillage des contacts MPO (22a, 22b) lors d'une traction opérée sur la fiche (21), la forme de l'épaulement (28) coopère avec un épaulement de la bague de verrouillage du contact MPO ;
- la forme fiche (21) coopère avec la forme de l'embase (20) pour assurer son accouplement et guider les contacts MPO (22a, 22b) lors de l'accouplement ;
- l'embase (20) comporte des adaptateurs MPO (32) dans lesquels chaque contact MPO (22b) de la fiche (21) est verrouillé avec le contact MPO (22a) correspondant dans l'embase (20).

2. Ensemble selon la revendication 1, dans lequel l'élément de maintien est un clip de rétention (25) moulé avec la fiche (21) et positionné au niveau de chaque ouverture axiale.

3. Ensemble selon la revendication 1, dans lequel chaque contact MPO (22b) de la fiche (21) comporte une entretoise (26), le premier élément de détrompage est positionné sur ladite entretoise (26).

4. Ensemble selon la revendication 1, dans lequel l'ouverture axiale comporte un épaulement coopérant avec une partie de chaque contact MPO (22b) pour bloquer l'extrémité du contact MPO (22b) dans l'ouverture axiale de la fiche (21), ledit contact MPO (22b) comporte une bague de verrouillage (27) positionnée dans l'ouverture axiale et insérée de l'autre côté de l'insertion du chaque contact MPO (22b) pour maintenir les contacts MPO (22b).

5. Ensemble selon la revendication 1, dans lequel le premier détrompage est une rainure et le deuxième détrompage est un évidement de forme complémentaire à celle de la rainure.

6. Ensemble selon la revendication 1, dans lequel la fiche (21) comporte un film de protection (23) des contacts MPO (22b).

7. Ensemble selon la revendication 1, dans lequel la fiche (21) comporte une partie rainurée facilitant la préhension.

8. Ensemble selon la revendication 1, dans lequel la fiche (21) comporte un joint d'étanchéité (24) positionné autour des contacts MPO (22b) et réalise l'étanchéité lors de l'accouplement de la fiche (21) et l'embase (20).

9. Ensemble selon la revendication 1, dans lequel la fiche (21) comporte un troisième élément de détrompage positionné sur la surface extérieure coopérant avec un quatrième élément de détrompage positionné sur l'embase (20).

10. Ensemble selon la revendication 1, dans lequel l'embase (20) comporte une plaque séparatrice dont chaque côté comporte au moins deux ouvertures adaptées à recevoir une partie de contact MPO (22b) d'une fiche (21).
